# EUROPEAN PATENT SPECIFICATION

(11) **EP 0 398 185 B1**
(45) Date of publication and mention of the grant of the patent: **03.04.1996**
(21) Application number: 90108928.4
(22) Date of filing: 11.05.1990
(51) Int. Cl.: H04N 1/32, H04N 1/21

(54) **Electronic filing apparatus for filing documents using mark sheet**
Vorrichtung zur elektronischen Dokumentenablage unter Verwendung eines Markierblatts
Appareil pour le classement électronique de documents utilisant une feuille de pointage

(30) Priority: 15.05.1989 JP 121802/89; 15.05.1989 JP 121803/89; 15.05.1989 JP 121804/89
(43) Date of publication of application: 22.11.1990
(73) Proprietor: SHARP KABUSHIKI KAISHA, Osaka-shi Osaka 545 (JP)
(72) Inventor: Kita, Sumio, Nara-shi, Nara-ken (JP)
(74) Representative: TER MEER - MÜLLER - STEINMEISTER & PARTNER

(56) References cited:
- EP-A- 0 096 178
- EP-A- 0 125 877
- US-A- 4 670 791
- PATENT ABSTRACTS OF JAPAN, vol. 12, no. 281 (E-641), 02 August 1988

## Description

The present invention relates generally to electronic filing apparatuses, and more particularly to an electronic filing apparatus for filing documents employing an optically readable mark sheet.

### Description of the Background Art

Electronic filing apparatuses are recently highlighted as apparatuses for filing documents produced daily in offices. Such an electronic filing apparatus comprises a scanner by which information of documents is optically read to be stored in a storage medium such as an optical disc. The electronic filing apparatus has a function of searching for registered information so as to retrieve required information from the registered information and then output the same to a printer at any time by predetermined output means.
It is proposed that the above described electronic filing apparatus has a structure that the scanner includes an automatic paper feeding device. In this structure, the automatic paper feeding device sequentially feeds a data sheet to the scanner without moving the scanner upon scanning the data sheet, whereby information is automatically read from the data sheet being set in the scanner.
On reading a data sheet, reading conditions need to be set in the electronic filing apparatus depending on the size of an original sheet or a data sheet, whether the surface of the original is one side or both sides of paper, the density of an image, whether as image of the original sheet includes characters, photographs or the mixture of characters and photographs, etc. In case of reading different types of data sheets, reading conditions can vary frequently for each data sheet and hence must be set many times. In the above described electronic filing apparatus, reading conditions are set by operation of a keyboard by an operator. Thus, the operator must attend the operation of the keyboard all the time in reading the data sheets. Furthermore, the operation of reading the data sheet by the scanner is interrupted during setting the reading conditions, resulting in a disadvantage that the time required for filing is increased.

In addition, in the electronic filing apparatus, since the number of read originals is not counted, plural sheets of originals are erroneously fed at a time by the automatic paper feeding device in the scanner. Thus, the plural sheets other than the first page are not read, thereby entailing a problem that the information of the originals cannot be detected upon searching for data sheet thereof later.

Moreover, in the electronic filing apparatus, data for searching for data sheets is required to be registered for a set of data sheets, together with data read from the data sheets. Therefore, the amount of information registered is small, and when filing data sheets in which individual information is written for each paper, data for searching for a data sheet need be set for each paper, so that a complicated and troublesome operation is required.

EP-A-0 096 178 discloses an electronic file distribution apparatus comprising reading means for reading information from an original sheet having original data and from a separate mark sheet having marks indicating a processing condition of the original sheet, determining means for determining whether the mark sheet is read or not by the reading means, and setting means for setting a processing condition of the original sheet based on the processing condition represented by the marks in accordance with a determination that the mark sheet is read by said determining means. According to the purpose of this known file distribution apparatus, distinct data fields of processing conditions are contained on the mark sheet used by said electronic file distribution apparatus and it is partitioned into a plurality of control zones. Each zone contains dedicated marked sense information for controlling the input work stations, the network nodes and the output work station. In the input work station, marked sense information of said mark sheet which is associated with the input station control zones is extracted and utilized to control the input work station. Marked sense information which is associated with network node control zone is encoded and transmitted with identifying marks to the network nodes for further processing. Marked sense information which is associated with output station control zone is extracted, encoded and transmitted to the network node where it is rooted to the output work station.

EP-A-0 125 877 describes a known sheet information input apparatus for an electronic filing apparatus. This known electronic filing apparatus is controlled by control information included on OMR sheets, which are put in and scanned by an optical scanner. This known electronic filing apparatus comprises sheet-kind judging means for judging whether either of a document sheet, an OMR sheet and an OCR sheet is inputted, document input means for inputting an image of a document sheet, and optical mark reader for inputting specific information such as a key word or a title by reading specific marks on the OMR sheet and an optical character reader for inputting information such as the keyword or the title by reading characters on an OCR sheet. Each of the document sheets, OMR sheets and OCR sheets are separately provided.

US-A-4 670 791 discloses an electronic file distribution apparatus which employs a distinguishing document placed between each set of original documents, said distinguishing document distinguishing the documents for one destination from the documents of another destination. The number of documents within each set are counted by counting the documents fed until the distinguishing document is detected, this number is then compared with the number entered in advance for each destination. A warning is indicated when a difference between these numbers is detected.

### SUMMARY OF THE INVENTION

It is a primary object of the present invention to provide an electronic filing apparatus facilitating registration of data sheets even in case where the amount of information of data sheets by one case is small.

According to an advantageous development a reading condition can easily be set by the electronic filing apparatus of the present invention.
Furthermore, an operator can be informed in case that information of an original is dropped due to a reading error.

According to a further advantageous development a search condition can easily be set by the electronic filing apparatus according to the present invention.

According to a primary aspect of the present invention, an electronic filing apparatus comprises:
reading means for optically reading original information and mark information, said reading means being adapted for reading at least a first type of mark sheets having predetermined marks and including data of the original information in a portion thereof;
determining means for determining whether or not said first type of marks sheets including the data of the original information is read by said reading means;
recognizing means for individually recognizing the original information and the mark information from said mark sheet when a determination is made by said determining means that said first type of mark sheets including the data of the original information is read; and
filing means for filing the original information and the mark information recognized by said recognizing means (claim 1).

Therefore, when the amount of original information of the original data sheets to be registered is small, the use of the first type of mark sheets partially including data of original information makes it possible to read and recognize search condition or information, information to be registered and so on at a time and also enhance the efficiency of registration to facilitate labour-saving of office work.

Depending claims 2 to 7 are each specifying developments thereof.

The foregoing and other objects, features, aspects of operation and advantages of the present invention will become more apparent from the following detailed description of the present invention when taken in conjunction with the accompanying drawings.

### BRIEF DESCRIPTION OF THE DRAWINGS

Fig. 1 is a schematic block diagram showing an electrical configuration of an electronic filing apparatus according to the present invention;
Fig. 2 is a diagram showing the configuration of a CPU for processing the second type of OMR sheets according to a first operational aspect explained in the flow chart of Fig. 4;
Fig. 3 is a diagram showing a second type of OMR sheets according to the present invention;
Fig. 4 is a flow chart for describing the first operational aspect when using said second type of OMR sheets;
Fig. 5 is a diagram showing the configuration of a CPU for processing said second type of OMR sheets according to a second operational aspect;
Figs. 6A and 6B are flow charts for describing the second operational aspect of the present invention when the second type of OMR sheets is used;
Fig. 7 is a diagram showing a first type of OMR sheets according to the present invention;
Fig. 8 is a diagram showing the configuration of a CPU for processing said first type of OMR sheets according to a third operational aspect; and
Fig. 9 is a flow chart for describing the third operational aspect of the present invention.

### DESCRIPTION OF THE PREFERRED EMBODIMENT

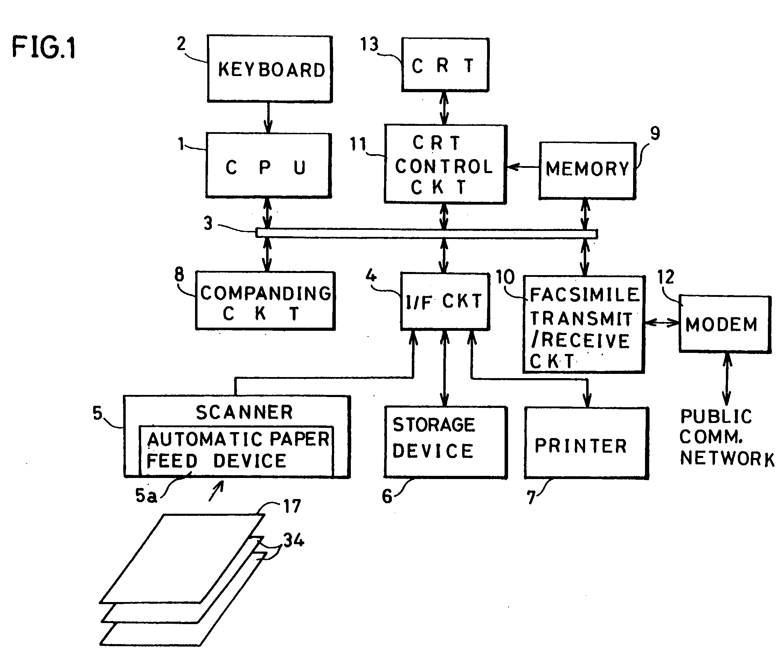

Referring to Fig. 1, an electronic filing apparatus comprises a CPU 1 for controlling the entire apparatus. The CPU 1 is connected to a keyboard 2 and provided with various instructions and the like. The CPU 1 is connected via a host bus 3 and an interface circuit (I/F circuit in the figure) 4 to a scanner 5, a storage device 6 and a printer 7. The CPU 1 is further connected via host bus 3 to a companding circuit 8, a memory 9, a facsimile transmitting/receiving circuit 10 and a CRT control circuit 11.

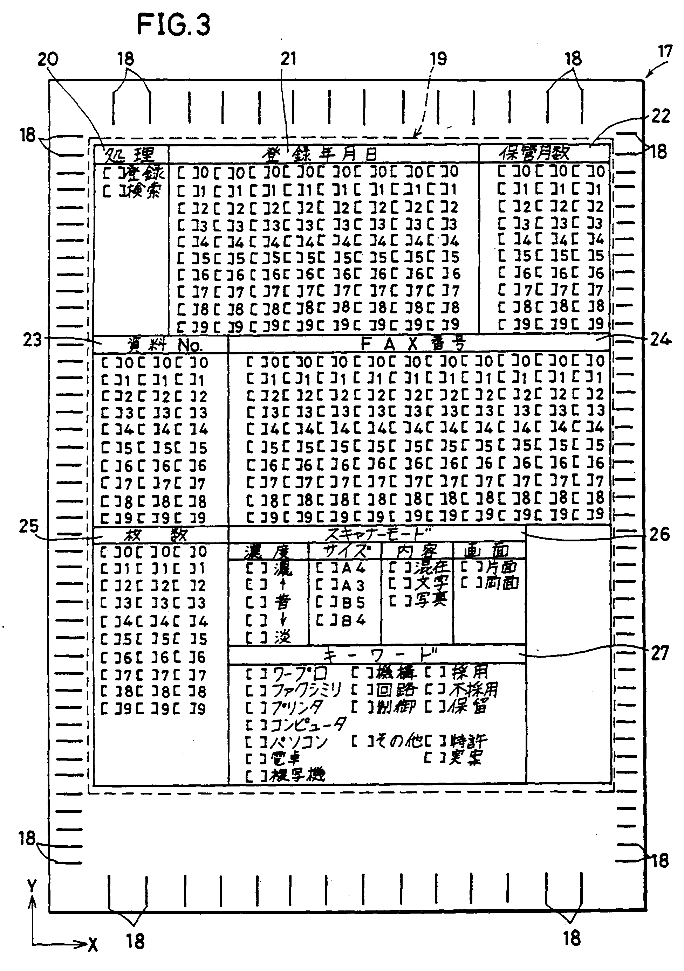

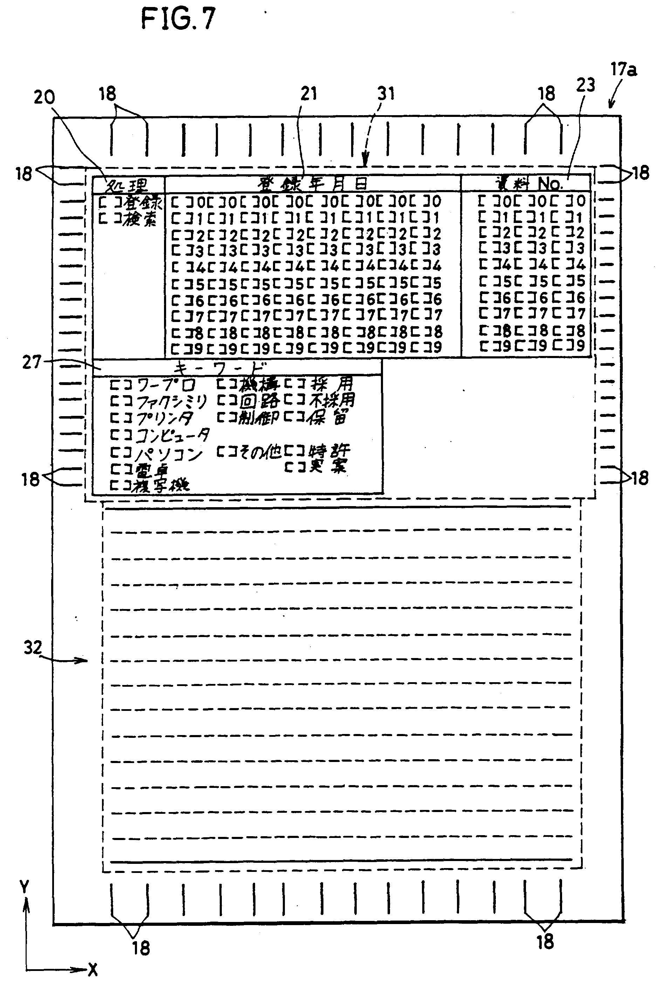

The scanner 5 as reading means includes an automatic paper feeding device 5a capable of both one-side paper feeding and two-side paper feeding. While automatic paper feeding device 5a is feeding a set of data sheets, scanner 5 optically reads image information of the data sheets (hereinafter referred to as primary information) and information for carrying out registration, search and other processings (hereinafter referred to as secondary information). Data sheets include a first type of mark sheets 17a (Fig. 7) and a second type of mark sheets 17 (Fig. 3) and one or more original sheets 34. The scanner 5 is set to operate in a reading mode for selecting the density of an image, whether or not the image includes characters or photographs, or the mixture thereof, the size of an original, whether or not the surface of the original is one-side or two-sides of paper, etc. in correspondence with instructions from CPU 1. The scanner 5 performs paper feeding and reading corresponding to this reading mode.

The storage device 6 is formed of a recording/reproducing device such as an optical disc device which records primary information and secondary information on a record medium and reproduces the recorded information when necessary.

The companding circuit 8 encodes primary information read by scanner 5 to compress the encoded primary information, and also decodes the compressed primary information to expand and restore the decoded primary information.

The memory 9 temporarily stores primary information, secondary information and other data to transmit the stored information and data to a predetermined device in correspondence with instructions from CPU 1, in performing processings such as registration and search.

The facsimile transmitting/receiving circuit 10 for transmitting/receiving an image to/from a facsimile device of the other party is connected via a public communication network through modem 12 to the other party's facsimile device.

The CRT control circuit 11 is connected to CRT 13 for controlling display of CRT 13. The CRT 13 displays primary information and secondary information corresponding to display instructions of CPU 1.

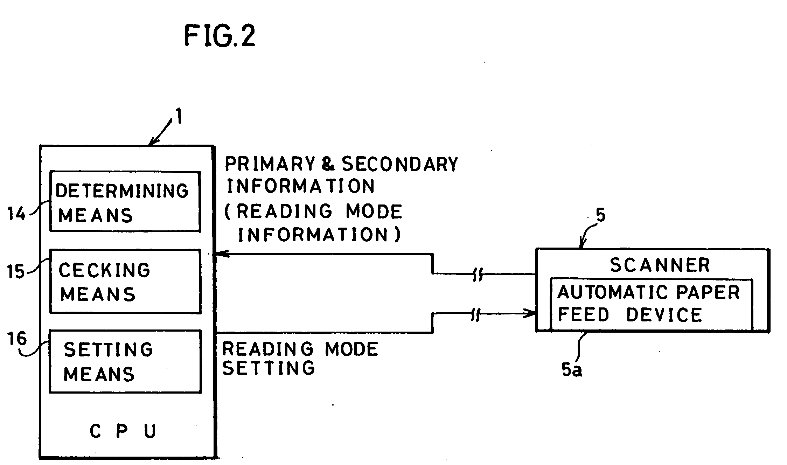

Referring to Fig. 2, when the second type of OMR sheets and original sheets are to be processed CPU 1 comprises determining means 14, checking means 15 and setting means 16.

The determining means 14 determines whether the data sheet read by scanner 5 is an OMR (Optical Mark Reader) sheet 17, which will be described later, in accordance with the presence/absence of timing marks 18.

The checking means 15 checks the presence/absence of each information, which will be described later, out of secondary information of OMR sheet 17 read. The setting means 16 transmits reading mode setting information to scanner 5 in accordance with the information of the above described reading mode so as to set the reading mode.

Referring to Fig. 3, the second type of OMR sheets 17 has timing marks 18 indicating a reading area at the periphery thereof. An area 19 for setting various information to be secondary information is provided inward from the periphery having timing marks 18.

The timing marks 18 are provided in a row direction (X direction) and in a column direction (Y direction) with a predetermined space from one another corresponding to the location of marks written in area 19.

The upper part of area 19 includes a processing type selecting field 20 for selecting the type of processings (registration or search), a registration date field 21 for indicating a registration date, and a number-of-storage month field 22 for designating the number of months for storing primary information.

The middle part of area 19 includes a data number field 23 for indicating the registration number of data sheets to be registered, and a facsimile number field 24 for indicating a facsimile (telephone) number for transmitting/receiving data sheets by facsimile.

The lower part of area 19 includes a number-of-original sheet field 25 for designating the number of original sheets out of data sheets to be registered, a scanner mode field 26 for setting a reading mode (scanner mode) by scanner 5, and a key word field 27 for designating input/output devices of different types and indicating other information.

The scanner mode field 26 includes sub-fields for items required to be set for registration and search, for example, the degree of image density, the size of original, whether the image includes characters or photographs, or the mixture thereof, whether the surface of original is one-side or two-sides of paper, etc. These sub-fields further include places where marks are written in accordance with set items. Writing marks in these places corresponding to the type of data sheets causes OMR sheet 17 to have reading mode information.

The other fields 20-25 and 27 than scanner mode field 26 also include sub-fields for items required to be set for registration and search in the same manner as above, places of which marks are written in corresponding to the type of data sheets. The processings such as registration and search of data sheets are carried out in accordance with information obtained from the location of marks written as above on the second type of OMR sheets 17. The location of those marks can be recognized by detecting the location of timing marks 18 arranged in the row direction (X direction) and in the column direction (Y direction) employing known art.

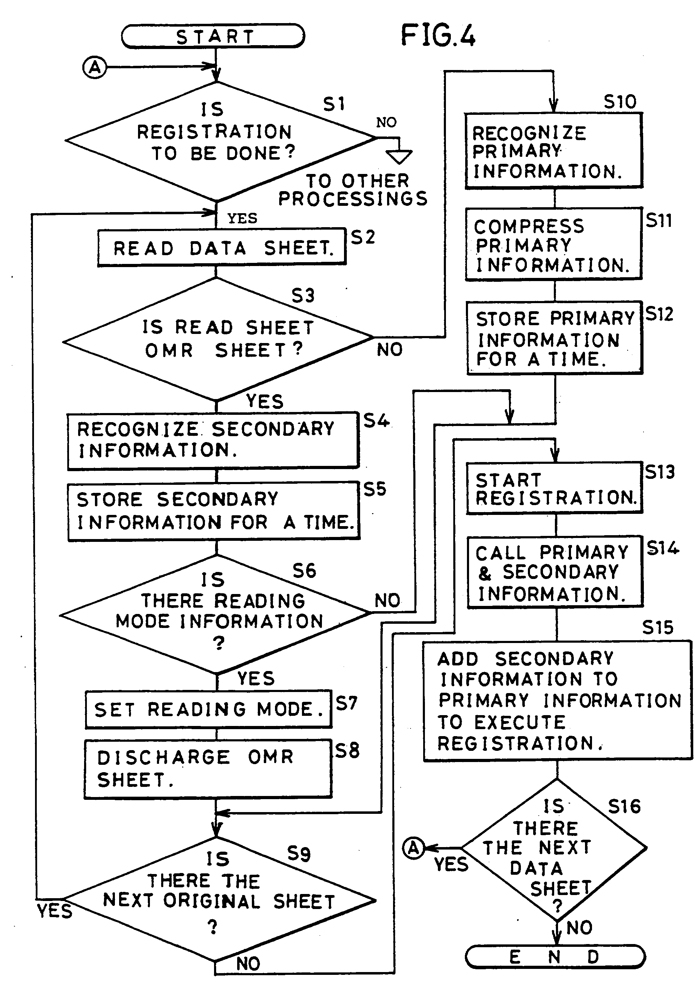

A description will now be given on a first operational procedure for registration in the electronic filing apparatus thus structured with reference to the flow chart of Fig. 4.

Prior to registration, marks are written in advance in each of fields 20-27 in area 19 on OMR sheet 17 of the second type in accordance with secondary information of data sheets.

First, an instruction including a registration processing is provided through a keying operation of keyboard 2 (step S1). In case of processings other than registration in step S1, a transfer is made to each of the processings. Meanwhile, in the case of registration processing, when data sheets per case are set in scanner 5 with OMR sheet 17 of the second type placed on top of original sheets 34, these data sheets are accepted beginning with OMR sheet 17 of the second type by automatic paper feeding device 5a and are then read by scanner 5 (step S2).

When timing marks 18 on OMR sheet 17 of the second type are read by the scanner 5, determining means 14 of CPU 1 determines that the data sheet is OMR sheet 17 (step S3). Next, secondary information represented by marks in area 19 on OMR sheet 17 of the second type is recognized (step S4), then temporarily stored in memory 9 (step S5). Further, in CPU 1, checking means 15 checks the presence/absence of marks in scanner mode field 26 on OMR sheet 17 of the second type, so that a determination is made whether reading mode information is written or not (step S6).

When it is determined that the reading mode information is written in step S6, a reading mode of scanner 5 is set by setting means 16 corresponding to the determination (step S7). Thereafter, OMR sheet 17 of the second type from which secondary information is read is discharged by automatic paper feeding device 5a of scanner 5 (step S8), and a determination is made whether or not there is any subsequent original sheet (step S9). When it is determined that the reading mode information is absent in step S6, the processing transfers to step S9.

Since the second page of data sheets, i.e., original sheet 34 is now set next to OMR sheet 1 of the second type, a determination is made that there is a subsequent original sheet in step S9, so that the processing transfers to step S2. Then, the above described original sheet 34 is accepted in scanner 5 in the same manner as OMR sheet 17 of the second type and then read in the reading mode set as described above. Since timing marks 18 are not provided on the original sheet 34 differently from OMR sheet 17 of the second type, determining means 14 determines that the original sheet 34 is not OMR sheet 17 of the second type in step S3, so that the primary information of the original sheet read by scanner 5 is recognized (step S10). This primary information is compressed by companding circuit 8 (step S11) and then temporarily stored in memory 9 (step S12).

In case where data sheets per case based on the secondary information of the second type of OMR sheets 17 comprise a plurality of original sheets, a determination is made that there are subsequent original sheets in step S9, and the processing further transfers to step S2. As for the subsequent original sheets starting from the second page, the processing is repeated in the procedure of steps S2, S3, S10-S12.

When this processing is completed with respect to the data sheets per case, and a determination is made that there are no subsequent original sheets in step S9, CPU 1 provides an instruction of starting registration (step S13). Thereafter, the primary and secondary information stored in memory 9 is called by CPU 1 (step S14). Then, CPU 1 adds the primary information to the secondary information to store the added information in recording device 6, so that the data sheets by one case are registered (step S15). When the registration is completed, a determination is made whether there is a further data sheet to be registered (step S16).

In case where there is only one case of data sheets to be registered, a determination is made that the next data sheets are absent in step S16, so that the registration processing is completed. Meanwhile, in case where there are a plurality of cases of data sheets to be registered, a determination is made that there are the next data sheets, so that the processing transfers to step S1. Based on secondary information of the next data sheets, said information written on OMR sheet 17 of the second type, the processing in and after step S1 is serially executed, so that the next data sheets are registered.

As described above, since the reading mode of scanner 5 can be automatically set by reading the marks provided in scanner mode field 26 on OMR sheet 17 of the second type, there is no need to reset a reading mode even for different types of data sheets.

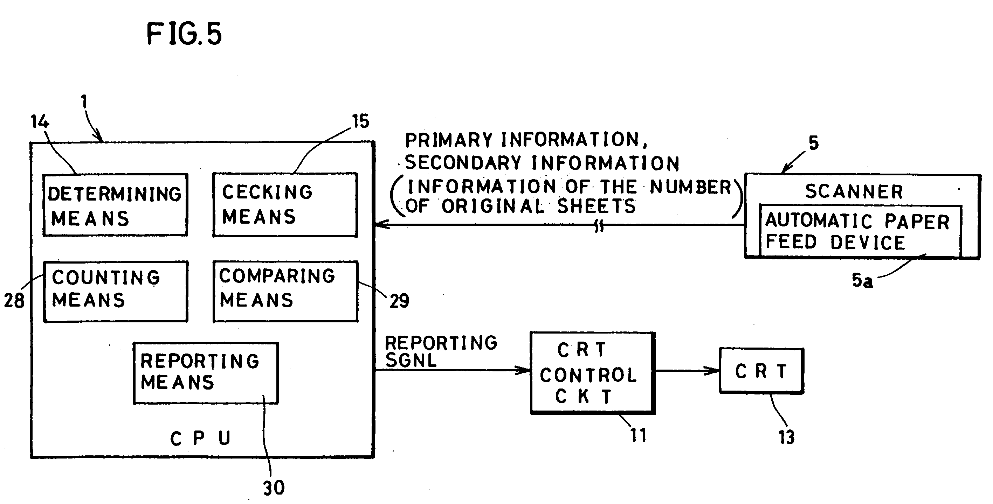

Fig. 5 shows diagramatically a configuration of a CPU 1 for processing the OMR sheet 17 of the second type and further data sheets according to a second operational aspect. CPU 1 comprises determining means 14 and checking means 15 similarly to the configuration shown in Fig. 2 and also comprises counting means 28, comparing means 29 and reporting means 30. Although setting means 16 shown in Fig. 2 is not shown in Fig. 5, CPU 1 comprises setting means 16 similar to the configuration of Fig. 2.

Since the electrical configuration of an electronic filing apparatus and a format of an OMR sheet of the second type employed in the electronic filing apparatus are the same as those shown in Figs. 1 and 3, respectively, a description thereof will not be repeated.

Referring to Fig. 5, checking means 15 checks whether or not there is information of the number of original sheets in number-of-original sheet field 25 on OMR sheet 17 of the second type.

Counting means 28 is formed of a counter and counts the number of original sheets 34 read up to the number thereof when reading is completed.

Comparing means 29 compares the number of original sheets, which is checked by checking means 15 and obtained from the number-of-original information of OMR sheet 17 of the second type, with the number of original sheets counted by counting means 28.

Reporting means 30, when the counted number of original sheets is not identical to the number of original sheets obtained from the number-of-original information according to the comparison by comparing means 29, outputs a reporting signal to display the contents thereof on CRT 13.

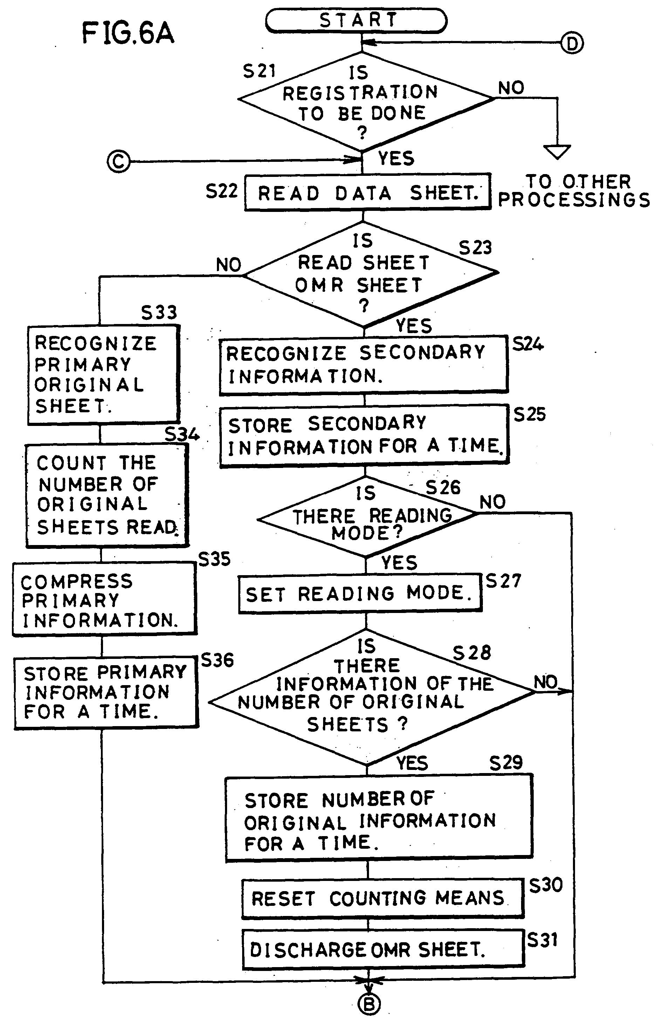

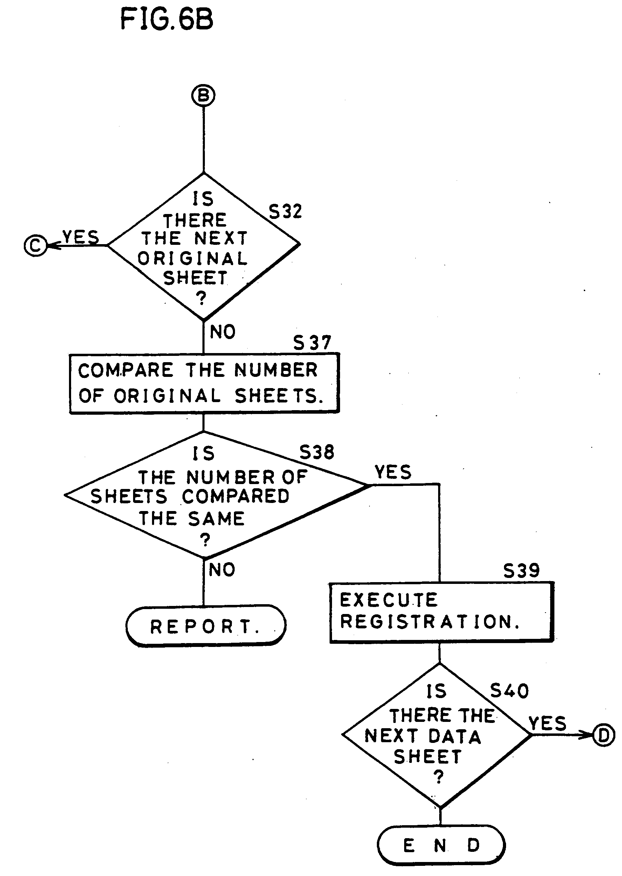

A description will now be given on a procedure of comparison between the number of original sheets read and the number of those to be read with reference to the flow charts of Figs. 6A and 6B.

Prior to a registration processing, marks are written in advance in each of fields 20-27 in area 19 on OMR sheet 17 of the second type based on secondary information of data sheets.

First, an instruction including a registration processing is provided through a key operation of keyboard 2 (step S21). In step S21, in case of performing processings other than the registration processing, the subject processing transfers to the other processings. Meanwhile, in the case of registration processing, when data sheets by one case are set with OMR sheet 17 of the second type atop in scanner 5, these data sheets are accepted beginning with OMR sheet 17 of the second type by automatic paper feeding device 5a and are then read by scanner 5 (step S22).

When timing marks 18 on the second type of OMR sheet 17 are read by scanner 5, determining means 14 of CPU 1 determines that the data sheet is OMR sheet 17 (step S23). Next, secondary information represented by marks in area 19 on OMR sheet 17 of the second type is recognized (step S24), then temporarily stored in memory 9 (step S25). Thereafter, checking means 15 of CPU 1 checks the presence/absence of marks in scanner mode field 26 on OMR sheet 17 of the second type, so that the presence/absence of reading mode information is determined (step S26). When a determination is made that there is reading mode information in step S26, a reading mode of scanner 5 is set corresponding to the determination (step S27).

Further in CPU 1, checking means 15 checks the presence/absence of marks in number-of-original sheet field 25 on the second type of OMR sheet 17, so as to determine the presence/absence of information of the number of original sheets (step S28). In case where the number of original sheets to be read is written as marks in number-of-original sheet field 25, a determination is made that there is the number-of-original sheet information in step S28. When this number of original information is temporarily stored in memory 9 (step S29), counting means 28 is reset (step S30). Thereafter, OMR sheet 17 from which secondary information is read is discharged by automatic paper feeding device 5a of scanner 5 (step S31), so that a determination is made whether or not there are any subsequent original sheets (step S32). If it is determined that there is no reading mode information in step S26, the processing transfers to step S32. Meanwhile, if it is determined that there is no number-of-original information in step S28, the processing similarly transfers to step S32.

Since original sheet 34, which is the second page of data sheets, is now set next to the second type of OMR sheet 17, a determination is made that there is a subsequent original sheet in step S32, and the processing transfers to step S22. In step S22, this original sheet is accepted by scanner 5 similarly to OMR sheet 17 of the second type and then read in the reading mode set as above.

Since there are no timing marks 18 attached on the above original sheet 34 differently from OMR sheet 17, determining means 14 determines that the original sheet 34 is not OMR sheet 17 in step S23. After primary information of the original sheet read by scanner 5 is recognized (step S33), counting means 28 counts the original sheet as the one actually read (step S34). The primary information is compressed by companding circuit 8 (step S35) to be stored temporarily in memory 9 (step S36).

In case where the data sheets by one case based on secondary information of the second type of OMR sheet 17 comprise a plurality of original sheets, a determination is made that there are subsequent original sheets in step S32, so that the processing transfers to step S22 again. As for the subsequent original sheets from the second page, the processing is repeated in the procedure of steps S22, S23, S33-S36. When this processing is completed with respect to the data sheets by one case and a determination is made that there is no subsequent original sheet in step S32, the number-of-original information temporarily stored in memory 9 is called in step S29. Comparing means 29 then compares the number of original sheets based on the above described information with the number of those read (step S37), so that a determination is made whether the result of comparison indicates that the number of those original sheets is equal (step S38).

In case where feeding a plurality of original sheets by automatic paper feeding device 5a of scanner 5 causes the number of original sheets actually read to be smaller than the number of original sheets stored in memory 9, a determination is made that the number of those original sheets is not identical according to the result of comparison in step S38. The reporting means 30 displays this result of determination on CRT 13 as an error to report to the operator. When a determination is made that the number of original sheets is identical according to the result of comparison in step S38, a registration is executed (step S39). In this registration, the secondary information read from the second type of OMR sheet 17 is added to the primary information read from the plurality of original sheets so as to be stored in storage device 6. When the registration of data sheets by one case are completed, a determination is made whether there are any further data sheets to be registered (step S40). In case where the data sheets by only one case are to be registered, it is determined that the next data sheets are absent in step S40 so as to complete the registration processing. Meanwhile, in case where data sheets by plural cases are to be registered, it is determined that there are the next data sheets, so that the processing transfers to step S21. Based on secondary information provided in the second type of OMR sheet 17 of the next data sheets, the processings in and after step S21 are serially executed, so that the registration of data sheets is carried out.

As described above, since the number of original sheets previously set in the second type of OMR sheet 17 is compared with the number of original sheets actually read, and the result of comparison is reported to the operator when the number of original sheets compared is not identical, the operator can recognize whether or not a predetermined number of original sheets are read correctly.

While CRT 13 displays the result of comparison that the number of original sheets set in the second type of OMR sheet 17 is not identical to the number of those read in this embodiment, the result indicating nonidentical number of original sheets may be outputted as a reporting sound by employing output means such as a speaker.

An OMR sheet 17a of a first type as shown in Fig. 7 is employed in a third operational aspect in accordance with the invention.

Referring to Fig. 7, an OMR sheet 17a of the first type comprises in an upper half area thereof a secondary information portion 31 in which predetermined items to be secondary information are written as marks, and comprises in a lower half area thereof a primary information portion 32 in which information to be primary information such as characters and figures are written directly.

Timing marks 18 are provided for indicating reading areas in the top margin and in the right and left margins at the periphery of secondary information portion 31. These timing marks 18 are provided with a predetermined space from one another corresponding to the location of marks to be written in secondary information portion 31. Further, timing marks 18 are provided similarly in the bottom margin of primary information portion 32. No timing marks 18 are provided in the right and left margins of primary information portion 32.

The upper part of secondary information portion 31 includes a processing type selecting field 20 for selecting the type of processings, a registration date field 21 for indicating a registration date, and a data sheet number field 23 for indicating the registration number of data sheets to be registered. The lower part of secondary information portion 31 includes a key word field 27 for designating input/output devices of different types and indicating other information.

Marks are written in predetermined places in each of fields 20-23 and 27 in secondary information portion 31 in correspondence with the type of data sheets. Processings such as registration and search of data sheets are performed based on information obtained from the location of the marks written.

The location of the marks can be recognized by detecting the location of timing marks 18 arranged in a row direction (X direction) and a column direction (Y direction) employing known art.

In primary information portion 32, a field in which numerous information to be registered such as receipts, business reports and business diaries can be written is printed, so that each information can be directly written in the field.

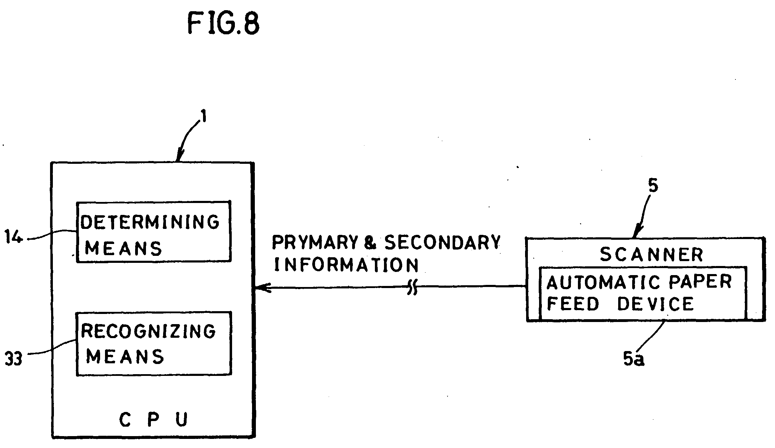

As shown in Fig. 8, CPU 1 comprises determining means 14 and recognizing means 33.

Determining means 14 determines whether or not an OMR sheet read by scanner 5 is the above described first type of OMR sheet 17a by detecting an area in which timing marks 18 are provided.

Recognizing means 33 recognizes marks written as secondary information in secondary information portion 31 formed on OMR sheet 17a of the first type separately from characters, figures and the like written directly as primary information in primary information portion 32.

Since the electrical configuration of an electronic filing apparatus for carrying out the third operational aspect is the same as that shown in Fig. 1, a description thereof will not be repeated.

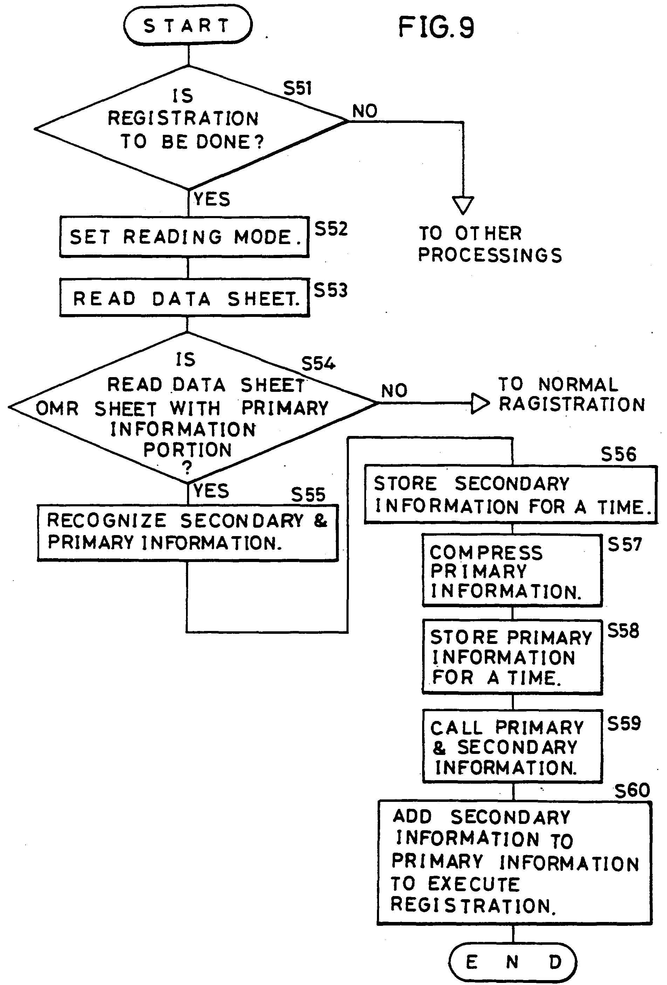

A description will now be given on a registration procedure in the electronic filing apparatus thus structured with reference to the flow chart of Fig. 9.

Prior to registration processing, secondary information is marked in each of fields 20-23 and 27 in secondary information portion 31 on the first type of OMR sheet 17a, and also contents to be registered such as receipts, business reports and business diaries are written in advance in primary information portion 32 of the first type of OMR sheet 17a.

First, an instruction including a registration processing is provided through a key operation of keyboard 2 (step S51). In case of performing processings other than the registration processing in step S51, a transfer is made to the other processings. Meanwhile, in the case of registration processing, a reading mode of scanner 5 is set employing, for example, keyboard 2 (step S52). When OMR sheet 17a of the first type is set in scanner 5, the set sheet is accepted by automatic paper feeding device 5a to be read by scanner 5 (step S53).

Next, determining means 14 of CPU 1 determines whether OMR sheet 17a is an OMR sheet of the first type having the primary information portion 32 (step S54). In case where a OMR sheet 17 of the second type is read, a determination is made that the OMR sheet is not the one having primary information portion 32 in step S54. In this case, after secondary information is then recognized, primary information of the next original sheet is read and recognized so as to perform a registration processing by means of the second type of OMR sheets 17 as described above with reference to the Figs. 2 to 6.

Since OMR sheet 17a of the first type has primary information portion 32, recognizing means 33 recognizes in step S55 the secondary information of secondary information portion 31 on OMR sheet 17a of the first type separately from the primary information of the primary information portion 32. The secondary information recognized by recognizing means 33 is then temporarily stored in memory 9, while the primary information is compressed by companding circuit 8 (step S57) and is then temporarily stored in memory 9 (step S58).

Thereafter, when CPU 1 instructs an execution of registration, the primary information and secondary information stored temporarily in memory 9 are called (step S59). Further, the secondary information is added to the primary information to be registered in storage device 6 (step S60). The secondary information registered can be employed as a label in searching for primary information.

As described in the foregoing, since the primary and secondary information provided in the first type of OMR sheet 17a having secondary information portion 31 and primary information portion 32 can be read and recognized at a time, the registration processing of data sheets in which information by one case can be accommodated in one original sheet becomes simple.

## Claims

1. An electronic filing apparatus comprising:
reading means (5) for optically reading original information and mark information, said reading means being adapted for reading at least a first type of mark sheets (17a) having predetermined marks and including data of the original information in a portion thereof;
determining means (14) for determining whether or not said first type of mark sheets (17a) including the data of the original information is read by said reading means (5);
recognizing means (33) for individually recognizing the original information and the mark information from said mark sheet (17a) when a determination is made by said determining means (14) that said first type of mark sheets (17a) including the data of the original information is read; and
filing means (6) for filing the original information and the mark information recognized by said recognizing means (33).

2. The electronic filing apparatus according to claim 1, wherein said mark information of said first type of mark sheets (17a) comprises information for searching for the original information filed by said filing means (6).

3. The electronic filing apparatus according to claims 1 or 2, wherein it further comprises:
paper feeding means (5a) for accommodating original sheets (34) having original data and a second type of mark sheets (17) including information of the number of said original sheets to feed said original sheets and said second type of mark sheets (17) one by one, said reading means (5) being adapted to read also said original sheets (34) and said second type of mark sheets (17);
counting means (28) for counting the number of said sheets fed by said paper feeding means (5a) to said reading means (5);
coincidence determining means (29) for determining whether the number of said sheets counted by said counting means (28) is coincident with the information of the number of said original sheets included in said mark sheet of the second type (17) and read by said reading means (5); and
reporting means (30) for generating alarm in accordance with a determination made by said coincidence determining means (29) that the number of said sheets counted is not coincident with said information of the number of said original sheets.

4. The electronic filing apparatus according to claim 3, wherein said second type of mark sheets (17) has marks indicating a processing conditicn of said original sheet (34), said reading means (5) are further reading from said second type of mark sheets (17) said marks indicating the processing condition of said original sheet (34);
said determining means (14) are determining whether said second type of mark sheets (17) is read or not by said reading means (5); and
setting means (16) are provided for setting a processing condition of said original sheet (34) based on the processing condition represented by said marks in accordance with a determination that said second type of mark sheets (17) is read by said determining means (14).

5. The electronic filing apparatus according to claim 4, wherein
said processing condition includes a reading condition of said reading means (5) in case of reading said original sheet (34);
said reading means (5) reads said original sheet (34) according to the reading condition set by said setting means (16).

6. The electronic filing apparatus according to claim 5, further comprising:
checking means (15) for checking that reading condition data of said original sheet (34) is included in said second type of mark sheets (17), wherein
said setting means (16) sets a reading condition when a checking is made by said checking means (15) that the reading condition data exist.

7. The electronic filing apparatus according to claim 4, wherein said filing means (6) are filing the information read by said reading means (5) based on the processing condition set by said setting means (16).

## Patentansprüche

1. Elektronische Dokumentenablagevorrichtung mit:
- einer Leseeinrichtung (5) zum optischen Lesen von Vorlageninformation und Markierungsinformation, die so ausgebildet ist, daß sie zumindest einen ersten Typ von Markierblättern (17a) liest, die vorgegebene Markierungen tragen und in einem Abschnitt Daten zur Vorlageninformation enthalten;
- einer Ermittlungseinrichtung (14) zum Ermitteln, ob der erste Typ von Markierblättern (17a) mit Daten zur Vorlageninformation von der Leseeinrichtung (5) gelesen wird;
- einer Erkennungseinrichtung (33) zum individuellen Erkennen der Vorlageninformation und der Markierungsinformation vom Markierblatt (17a), wenn von der Ermittlungseinrichtung (14) die Ermittlung erfolgte, daß der erste Typ von Markierblättern (17a) mit Daten zur Vorlageninformation gelesen wurde; und
- einer Dokumentenablageeinrichtung (6) zum Ablegen der Vorlageninformation und der Markierungsinformation, wie von der Erkennungseinrichtung (33) erkannt.

2. Elektronische Dokumentenablagevorrichtung nach Anspruch 1, bei der die Markierungsinformation des ersten Typs von Markierblättern (17a) Information zum Suchen nach der durch die Dokumentenablageeinrichtung (6) abgelegten Vorlageninformation enthält.

3. Elektronische Dokumentenablagevorrichtung nach einem der Ansprüche 1 oder 2, die ferner folgendes aufweist:
- eine Papierzuführeinrichtung (5a) zum Aufnehmen von Vorlagenblättern (34) mit Vorlagedaten sowie eines zweiten Typs von Markierblättern (17), die Information zur Anzahl der Vorlagenblätter enthalten, um die Vorlagenblätter und den zweiten Typ von Markierblättern (17) einzeln zuzuführen, wobei die Leseeinrichtung (5) so ausgebildet ist, daß sie sowohl die Vorlagenblätter (34) als auch den zweiten Typ von Markierblättern (17) liest;
- eine Zähleinrichtung (28) zum Zählen der Anzahl der von der Papierzuführeinrichtung (5a) der Leseeinrichtung (5) zugeführten Blätter;
- eine Übereinstimmung-Ermittlungseinrichtung (29) zum Ermitteln, ob die Anzahl der von der Zähleinrichtung (28) gezählten Blätter mit der Information zur Anzahl der Vorlagenblätter im Markierblatt vom zweiten Typ (17), wie von der Leseeinrichtung (5) gelesen, übereinstimmt; und
- eine Berichterstattungseinrichtung (30) zum Erzeugen eines Alarms in Übereinstimmung mit einer Ermittlung durch die Übereinstimmung-Ermittlungseinrichtung (29), daß die Anzahl der gezählten Blätter nicht mit der Information zur Anzahl der Vorlagenblätter übereinstimmt.

4. Elektronische Dokumentenablagevorrichtung nach Anspruch 3, bei der
- der zweite Typ von Markierblättern (17) Markierungen aufweist, die eine Verarbeitungsbedingung für ein Vorlagenblatt (34) angeben, wobei die Leseeinrichtung (5) ferner diese Markierungen, die die Verarbeitungsbedingung für ein Vorlagenblatt (34) angeben, vom zweiten Typ von Markierblättern (17) liest;
- die Ermittlungseinrichtung (14) ermittelt, ob der zweite Typ von Markierblättern (17) von der Leseeinrichtung (5) gelesen wird oder nicht; und
- eine Einstelleinrichtung (16) vorhanden ist, um eine Verarbeitungsbedingung für ein Vorlagenblatt (34) auf Grundlage der Verarbeitungsbedingung einzustellen, wie sie durch die Markierungen repräsentiert ist, entsprechend der von der Ermittlungseinrichtung (14) vorgenommenen Ermittlung, daß der zweite Typ von Markierblättern (17) gelesen wurde.

5. Elektronische Dokumentenablagevorrichtung nach Anspruch 4, bei der
- die Verarbeitungsbedingung eine Lesebedingung für die Leseeinrichtung (5) für den Fall des Lesens eines Vorlagenblatts (34) enthält; und
- die Leseeinrichtung (5) das Vorlagenblatt (34) entsprechend der durch die Einstelleinrichtung (16) eingestellten Lesebedingung liest.

6. Elektronische Dokumentenablagevorrichtung nach Anspruch 5, ferner mit:
- einer Prüfeinrichtung (15) zum Prüfen, daß Lesebedingungsdaten für das Vorlagenblatt (34) im zweiten Typ von Markierblättern (17) enthalten sind;
wobei die Einstelleinrichtung (16) eine Lesebedingung einstellt, wenn durch die Prüfeinrichtung (15) die Prüfung erfolgt, daß Lesebedingungsdaten existieren.

7. Elektronische Dokumentenablagevorrichtung nach Anspruch 4, bei der die Dokumentenablageeinrichtung (6) die durch die Leseeinrichtung (5) gelesene Information auf Grundlage der Verarbeitungsbedingung ablegt, die von der Einstelleinrichtung (16) eingestellt wurde.

## Revendications

1. Appareil d'archivage électronique comprenant :
un moyen de lecture (5) pour lire optiquement une information originale et une information de marque, ledit moyen de lecture étant conçu pour lire au moins un premier type de feuilles de marquage (17a) ayant des marques prédéterminées et comprenant des données de l'information originale dans une de ses parties ;
un moyen de détermination (14) pour déterminer si ledit premier type de feuilles de marquage (17a) comprenant les données de l'information originale est ou non lu par ledit moyen de lecture (5) ;
un moyen de reconnaissance (33) pour reconnaître de manière individuelle l'information originale et l'information de marque provenant de ladite feuille de marquage (17a) lorsqu'une détermination est effectuée par ledit moyen de détermination (14) selon laquelle ledit premier type de feuilles de marquage (17a) comprenant les données de l'information originale est lu ; et
un moyen d'archivage (6) pour archiver l'information originale et l'information de marque reconnues par ledit moyen de reconnaissance (33).

2. Appareil d'archivage électronique selon la revendication 1, dans lequel ladite information de marque du premier type de feuilles de marquage (17a) comprend une information pour rechercher l'information originale archivée par ledit moyen d'archivage (6).

3. Appareil d'archivage électronique selon la revendication 1 ou 2, qui comprend en outre :
un moyen d'alimentation en papier (5a) pour contenir des feuilles originales (34) ayant des données originales et un second type de feuilles de marquage (17) comprenant une information sur le nombre desdites feuilles originales pour délivrer lesdites feuilles originales et ledit second type de feuilles de marquage (17) une par une, ledit moyen de lecture (5) étant conçu pour lire également lesdites feuilles originales (34) et ledit second type de feuilles de marquage (17) ;
un moyen de comptage (28) pour compter le nombre desdites feuilles délivrées par ledit moyen d'alimentation en papier (5a) vers ledit moyen de lecture (5) ;
un moyen de détermination de coïncidence (29) pour déterminer si le nombre desdites feuilles comptées par ledit moyen de comptage (28) coïncide avec l'information sur le nombre desdites feuilles originales incluses dans ladite feuille de marquage du second type (17) et lues par ledit moyen de lecture (5) ; et
un moyen d'avertissement (30) pour produire une alarme en fonction d'une détermination effectuée par ledit moyen de détermination de coïncidence (29) selon laquelle le nombre desdites feuilles comptées ne coïncide pas avec ladite information sur le nombre desdites feuilles originales.

4. Appareil d'archivage électronique selon la revendication 3, dans lequel ledit second type de feuilles de marquage (17) porte des marques indiquant une condition de traitement de ladite feuille originale (34), ledit moyen de lecture (5) lisant en outre à partir dudit second type de feuilles de marquage (17), lesdites marques indiquant la condition de traitement de ladite feuille originale ;
ledit moyen de détermination (14) détermine si ledit second type de feuilles de marquage (17) est lu ou non par ledit moyen de lecture (5) ; et
un moyen d'établissement (16) est prévu pour établir une condition de traitement de ladite feuille originale (34) sur la base de la condition de traitement représentée par lesdites marques en fonction d'une détermination selon laquelle ledit second type de feuilles de marquage (17) est lu par ledit moyen de détermination (14).

5. Appareil d'archivage électronique selon la revendication 4, dans lequel
ladite condition de traitement comprend une condition de lecture dudit moyen de lecture (5) en cas de lecture de ladite feuille originale (34) ;
ledit moyen de lecture (5) lit ladite feuille originale (34) en fonction de la condition de lecture établie par ledit moyen d'établissement (16).

6. Appareil d'archivage électronique selon la revendication 5, comprenant en outre :
un moyen de vérification (15) pour vérifier que les données de condition de lecture de ladite feuille originale (34) sont comprises dans ledit second type de feuilles de marquage (17), dans lequel
ledit moyen d'établissement (16) fixe une condition de lecture lorsqu'une vérification est effectuée par ledit moyen de vérification (15) selon laquelle les données de condition de lecture existent.

7. Appareil d'archivage électronique selon la revendication 4, dans lequel ledit moyen d'archivage (6) archive l'information lue par ledit moyen de lecture (5) sur la base de la condition de traitement établie par ledit moyen d'établissement (16).
